(19) Europäisches Patentamt
European Patent Office
Office européen des brevets

(11) EP 1 726 605 B1

(12) **EUROPEAN PATENT SPECIFICATION**

(45) Date of publication and mention
of the grant of the patent:
**15.12.2010 Bulletin 2010/50**

(51) Int Cl.:
**C08G 18/65** (2006.01) **B65D 53/06** (2006.01)
**C08G 18/32** (2006.01) **C08G 18/79** (2006.01)

(21) Application number: **05720705.2**

(22) Date of filing: **14.03.2005**

(86) International application number:
**PCT/JP2005/004434**

(87) International publication number:
**WO 2005/087830 (22.09.2005 Gazette 2005/38)**

(54) **SEALING MATERIAL FOR CAP AND PROCESS FOR PRODUCING CAP USING THE SAME**

DICHTUNGSMATERIAL FÜR VERSCHLUSS UND VERFAHREN ZUR HERSTELLUNG EINES VERSCHLUSSES DAMIT

MATERIAU D'ETANCHEITE POUR BOUCHON ET PROCEDE DE PRODUCTION D'UN BOUCHON UTILISANT CE MATERIAU

(84) Designated Contracting States:
**DE FR GB**

(30) Priority: **17.03.2004 JP 2004075925**

(43) Date of publication of application:
**29.11.2006 Bulletin 2006/48**

(73) Proprietors:
• **TOYO SEIKAN KAISHA, LTD.**
**Tokyo 100-8522 (JP)**
• **JAPAN CROWN CORK CO. LTD.**
**Chiyoda-ku,**
**Tokyo 100 (JP)**
• Nippon Polyurethane Industry Co., Ltd.
**Tokyo 108-0014 (JP)**

(72) Inventors:
• **MORIGA, Toshinori,**
**TOYO SEIKAN KAISHA, LTD.**
**Tokyo 100-8522 (JP)**
• **AOYAMA, Naoki,**
**Technical Development Center**
**Hiratsuka-shi,**
**Kanagawa 254-0021 (JP)**

• **YOKOTA, Hiroei**
**Res Lab NIPPONPOLYRETHANE I.CO LTD**
**Yokohama-shi,**
**Kanagawa 245-0052 (JP)**

(74) Representative: **Paget, Hugh Charles Edward et al**
**Mewburn Ellis LLP**
**33 Gutter Lane**
**London**
**EC2V 8AS (GB)**

(56) References cited:
EP-A- 1 199 324       JP-A- 8 067 733
JP-A- 61 009 481      JP-A- 2002 060 727
JP-A- 2002 193 315    JP-A- 2003 205 963
JP-A- 2004 027 194    JP-A- 2004 075 071
JP-A- 2004 149 662    JP-A- 2004 359 760
JP-A- 2005 132 934

• **SAXENA P K ET AL: "Effect of castor oil on the structure and properties of polyurethane elastomers" J APPL POLYM SCI; JOURNAL OF APPLIED POLYMER SCIENCE MAR 15 1992, vol. 44, no. 8, 15 March 1992 (1992-03-15), pages 1343-1347, XP002472952**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a sealing gasket for closure, made of a polyurethane elastomer which is less in a swelling in particular with an alcoholic beverage and less in the absorption of the odor of the alcoholic beverage into the sealing gasket; and to a process for producing a closure using such a sealing gasket.

Description of the Prior Art

Many sealing gaskets for metal closure are made of a material using a polyvinyl chloride resin as a main component, for the good workability and moldability.

In these metal closure sealing gaskets, the polyvinyl chloride resin contains a plasticizer (typified by dioctyl phthalate) in a large amount and, therefore, there has been a problem that the plasticizer dissolves in the oil and fat, etc. with which the sealing gasket comes in contact. Against this dioctyl phthalate, there is a doubt that it may be an endocrine-disrupting substance. As a countermeasure therefor, a metal closure sealing gasket made of a polyvinyl chloride resin composition containing a derivative of an acyl oxycarboxylate as a plasticizer is described in, for example, JP-A-58-67780.

Also, in recent years, generation of dioxin in combustion of polyvinyl chloride resin for its disposal has become a social problem.

Meanwhile, molded polyurethane elastomers have excellent physical properties, for example, high tensile strength, fatigue resistance, good low-temperature flexibility, and abrasion resistance. Because of these properties, polyurethane elastomers are in use in production of rolls, packings, various machine parts, automobile parts, electronic apparatus parts, etc. Further, polyurethane elastomers are a high polymer material having very high biocompatibility to human body and, therefore, are also in use as a catheter, an artificial blood vessel, an artificial heart, an artificial kidney, etc.

As the process for producing a polyurethane resin, there is generally known, for example, a process of reacting a high-molecular polyhydroxyl compound, a low-molecular polyhydroxyl compound (a chain extender) and an organic polyisocyanate in the presence or absence of a catalyst.

This process is largely classified into two processes. One is a one-shot process of subjecting the above-three components to simultaneous reaction and casting; and the other is a prepolymer process of beforehand reacting a high-molecular polyhydroxyl compound and an organic polyisocyanate to form an isocyanate-terminated urethane prepolymer and then subjecting this prepolymer (as a main material) to a crosslinking reaction with a low-molecular polyhydroxyl compound.

As this prepolymer process for producing a polyurethane resin, there is disclosed, in, for example, JP-A-63-8685, a process which comprises reacting a polyester polyol with diphenylmethane diisocyanate to form an isocyanate-terminated urethane polymer and then subjecting this prepolymer (as a main material) to a heat treatment of 140˚C with a mixture (as a crosslinking agent) of 1,4-butanediol and trimethylolpropane to obtain a polyurethane elastomer having a hardness (JIS A) of 78 to 80. The polyurethane elastomer obtained by this process has excellent mechanical strengths and is well balanced as a cleaning part for electronic photocopier, in particular.

As the technique of using a polyurethane resin as a sealing gasket for a closure of a container (e.g. a pail or an open drum), there is, for example, a technique described in JP-A-61-9481. In this technique, a first solution containing a urethane prepolymer as a main component and a second solution containing a polyol as a main component are mixed to obtain a mixture having a controlled viscosity of 200 to 20,000 mPa·s at 0 to 60˚C.

In the above technique disclosed in JP-A-61-9481, as the polyisocyanate compound used for obtaining the urethane prepolymer, there are mentioned tolylene diisocyanate, diphenylmethane diisocyanate, etc. In the Examples of the literature, there is used an isocyanate-terminated prepolymer obtained by reacting tolylene diisocyanate and a bifunctional polypropylene glycol.

Polyurethane elastomers using such an aromatic isocyanate have a long history. In the casting by the prepolymer process, a short-chain glycol such as 1,4-butanediol, trimethylolpropane or the like is used as a curing agent for diphenylmethane diisocyanate-based urethane prepolymer, and an amine compound typified by CUAMINE or MOCA is used as a curing agent for tolylene diisocyanate-based urethane prepolymer. A polyurethane elastomer produced by curing with MOCA has a long history, but MOCA is feared for its possible carcinogenicity.

Polyurethane elastomers using an aromatic isocyanate have excellent mechanical strengths. However, when they are produced so as to have a low hardness, specifically a JIS A hardness of 75 or less, they are extremely inferior in mechanical properties and have had a problem particularly in tensile strength. Further, since aromatic polyisocyanates cause yellowing with the lapse of time, it was impossible to produce a molded polyurethane elastomer causing no yellowing, using an aromatic isocyanate.

Furthermore, when a polyurethane elastomer is used in hygienic storage of food, the aromatic isocyanate used as a component of the polyurethane elastomer is hydrolyzed to become an amine compound. For example, 4,4'-diphenylmethane diisocyanate, when hydrolyzed, becomes 4,4'-diaminodiphenylmethane. This compound is ordinarily called DAM and has a very high carcinogenicity. Therefore, it is not preferred to use an aromatic amine or a compound which may become an amine terminal when hydrolyzed, for production of a polyurethane elastomer used in hygienic storage of food.

In consideration of these points, a sealing gasket for a closure, comprising a polyurethane elastomer, has been proposed, said polyurethane elastomer being low in hardness, causing no yellowing, and being able to be used even for a food hygiene application (See EP1199324).

The polyurethane elastomer for this sealing gasket is produced by using a polyisocyanate component and a polyol component, said polyisocyanate component having an isocyanate group content of 5 to 38% by weight and an average functional group number of 2 to 3, said polyol component having a hydroxyl value of 20 to 350 mgKOH/g and an average functional group number of 2 to 3. The polyisocyanate component is formed by modifying an aliphatic isocyanate and/or an alicyclic isocyanate.

However, the polyurethane elastomer for this sealing gasket has narrow options in a balance between hydrophobic and hydrophilic properties, and thus it is difficult to ensure a proper balance between hydrophobic and hydrophilic properties, which is very low in an affinity for a lower alcohol (in particular, ethanol). Therefore, there is caused a problem that when the sealing gasket is used for filling an alcoholic beverage, the polyurethane elastomer of a closure is swelled, and the odor of the alcoholic beverage is transferred to the sealing gasket so as to be left therein.

SUMMARY OF THE INVENTION

An object of the present invention is to provide a sealing gasket for a closure, comprising a polyurethane elastomer, said polyurethane elastomer being less in a swelling with an alcoholic beverage, and in the absorption of the odor of the alcoholic beverage into the sealing gasket; and to provide a process for producing a closure by using the sealing gasket. Furthermore, another object of the present invention is to provide a sealing gasket comprising a polyurethane elastomer, for a closure such as a metallic closure of a food container which is excellent in sealing properties, said polyurethane elastomer being little eluted such that it can be used even for a food hygiene application, being tough and causing no yellowing; and to provide a process for producing a closure by using the sealing gasket.

As a result of a study, the present inventors found out that the above aims can be achieved by forming a polyurethane elastomer of low hardness and no yellowing using a non-aromatic polyisocyanate component, a particular polyol component, and a glycerin fatty acid ester having hydroxyl group(s). The present invention has been completed based on the above finding.

That is, the present invention provides a sealing gasket for closure as defined in claim 1.

The invention further provides a process for producing a closure as defined in claim 8.

Also provided is process for producing closure as defined in claim 15.

A sealing gasket made of a polyurethane elastomer, obtained in the present invention, when used for a closure (e.g. a metal closure of food container), is less in a swelling with an alcoholic beverage and less in the absorption of the odor of the alcoholic beverage into the sealing gasket, and causes no yellowing by ultraviolet light, has a strength at least equal to those of sealing gaskets produced from an aromatic isocyanate and, moreover, excellent rubber properties, is low in dissolution in liquid foods contained in the food container, and promises sufficient sealability.

The process for producing a closure according to the present invention is high in productivity and can use the production facilities for other materials such as polyvinyl chloride resin and the like.

DETAILED DESCRIPTION OF THE INVENTION

The present invention is described in detail below.

As the aliphatic isocyanate and alicyclic isocyanate used in the present invention, there can be mentioned hydrogenated aromatic isocyanates, hexamethylene diisocyanate (HDI), isophorone diisocyanate (IPDI), lysine diisocyanate, etc. Of these, HDI and/or IPDI is preferred, and HDI is more preferred.

Polyurethane resins obtained from aromatic polyisocyanates such as tolylene diisocyanate, diphenylmethane diisocyanate and the like are known to cause yellowing and are not ordinarily preferred in applications which come in sight of general consumers. Meanwhile, polyurethane resins obtained from aliphatic isocyanates or alicyclic isocyanates are known not to cause yellowing and are in use in a large amount as an isocyanate source for coating resin. These non-aromatic isocyanates, however, have problems; for example, they have low reactivity and polyurethane elastomers produced therefrom have low tensile strengths. Therefore, the use of the non-aromatic isocyanates has been limited. In the present invention, the above problems have been alleviated by modification of aliphatic isocyanate and/or alicyclic isocyanate.

As the method for modification of aliphatic isocyanate and/or alicyclic isocyanate for production of the polyisocyanate component (A) of the present invention, there can be mentioned, for example, a dimerization reaction (formation of uretdione bond or subsequent formation of carbodiimide bond), a trimerization reaction (formation of isocyanurate bond) or a higher polymerization reaction (formation of uretonimine bond), each of an aliphatic isocyanate and/or an alicyclic isocyanate; a urea-forming reaction, a urethanization reaction or an amidation reaction, each between the above isocyanate and a polyfunctional active hydrogen group-containing compound (e.g. water, polycarboxylic acid, polyol or polyamine); an allophanate-forming reaction or a biuret-forming reaction, each between one of the above reaction products and the above isocyanate; a blocking reaction (masking) between the above isocyanate and a monofunctional active hydrogen group-containing compound (e.g. phenol or monool); and a high polymer-forming reaction or a modification reaction, each between the above isocyanate and a high-molecular polyol having a bond or a substituent (e.g. polyester polyol, polyether polyol or graft polyol). Of these modification methods, preferred are a dimerization reaction, a trimerization reaction, a higher polymerization reaction, a urethanization reaction, a urea-forming reaction, an amidation reaction, an allophanate-forming reaction and a biuret-forming reaction, all using the above isocyanate. Particularly preferred are a dimerization reaction, a trimerization and a urethanization reaction, all using the above isocyanate.

As a specific example of the polyisocyanate component (A), there is preferred a polyisocyanate obtained, as described in JP-B-63-35655, by reacting HDI with a polyol having a number-average molecular weight of 3,000 or less and average 2 to 3 functional groups, to urethanize 15% by weight or less of the total isocyanate groups of HDI to synthesize an HDI-polyol adduct, and then adding, to the HDI-polyol adduct, 0.001 to 0.25% by weight of an isocyanurate-forming catalyst and 0.5% by weight of a cocatalyst to subject 60% by weight or less of the total isocyanate groups to an isocyanurate-forming reaction at 100°C or less.

Also preferred is, for example, an isocyanate-terminated prepolymer obtained from HDI or IPDI and a low-molecular polyol and/or a high-molecular polyol (in particular, a low-molecular polyol is preferred).

As the low-molecular polyol, there can be mentioned, for example, ethylene glycol, 1,2-propanediol, 1,3-propanediol, 1,2-butanediol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, cyclohexane-1,4-diol, cyclohexane-1,4-dimethanol, dimethylolheptane, dimer acid diol, trimethylolpropane, glycerin, hexanetriol, quadrol, bisphenol A, hydrogenated bisphenol A, compounds having a number-average molecular weight of less than 500, obtained by adding, to one of the above alcohols, ethylene oxide or propylene oxide, and N,N,N',N'-tetrakis(2-hydoxypropyl)-ethylenediamine, and a mixture of two or more of them.

The high-molecular polyol is a polyol having a number-average molecular weight of 500 or more, preferably 500 to 10,000. As specific examples of the high-molecular polyol, there can be mentioned polypropylene glycol type polyether polyols (PPGs), polytetramethylene ether glycols (PTMGs), adipate type polyester polyols, polycaprolactone type polyester polyols and polycarbonate type polyols, and a mixture of two or more of them, typified by commercial products such as Preminol and Excenol of Asahi Glass Co., Ltd. and ACLAIM of LION DELL, and

In the present invention, when the polyisocyanate component (A) is produced from HDI, the amount of free HDI in the polyisocyanate component (A) is preferably 1% by weight or less because HDI has a low boiling point, a high vapor pressure and an offensive odor. The polyisocyanate component (A) is preferably a liquid at ordinary temperature for easy handling.

In the present invention, the polyisocyanate component (A) can be used singly or in admixture of two or more kinds.

The isocyanate group content in the polyisocyanate component (A) is 5 to 38% by weight, preferably 8 to 25% by weight. When the isocyanate group content is less than 5% by weight, the polyisocyanate has too high a viscosity and is difficult to handle. When the isocyanate group content is more than 38% by weight, it is substantially difficult to control the concentration of free raw material isocyanate at 1% by weight or less. The "isocyanate group content" referred to herein is the content of isocyanate groups reactive with the polyol component (B), and includes even those isocyanate groups which show no activity of isocyanate group at ordinary temperature but generate isocyanate group at high temperatures, such as hydroxyl-blocked isocyanate group, uretdione group formed by cyclic polymerization of two isocyanate groups, and uretonimine bond formed by addition of one isocyanate group to carbodiimide group. However, the hydroxyl-blocked isocyanate group is not preferred in the present invention because the blocking agent used vaporizes and causes a problem.

The average number of functional groups in the polyisocyanate component (A) is 2 to 3 in view of the compression set and the amount of dissolution of the polyurethane elastomer obtained.

In the present invention, the polyol component (B) is specifically a high-molecular polyol, a low-molecular polyol or a mixture thereof. A high-molecular polyol or a mixture of a high-molecular polyol and a low-molecular polyol is preferred (in particular, a high-molecular polyol is more preferred), because it enables easy achievement of required properties.

In the present invention, each of the high-molecular polyol and the low-molecular polyol can be used singly or in admixture of two or more kinds.

As the high-molecular polyol, there can be mentioned the previously-mentioned polyols having a number-average molecular weight of 500 or more. Of these high-molecular polyols, preferred are PTMGs and adipate type polyester polyols for the low dissolution of the polyurethane elastomer formed therewith. PTMGs preferably have a number-average molecular weight of 500 to 2,000. When the number-average molecular weight is more than 2,000, the PTMG has high crystallinity and is difficult to handle.

As the low-molecular polyol, there can be mentioned the previously-mentioned polyols having a number-average molecular weight of less than 500.

There is no particular restriction as to the amount of the low-molecular weight polyol used. The amount is appropriately determined depending upon, for example, the hardness to be possessed by the intended polyurethane elastomer; however, the amount is preferably 5 moles or less, particularly preferably 0.1 to 3 moles per mole of the high-molecular polyol.

The polyol component (B) has a hydroxyl value of 20 to 350 mgKOH/g, preferably 100 to 350 mgKOH/g. When the hydroxyl value is less than 20 mgKOH/g, the polyurethane elastomer obtained is too soft and has too large a compression set. When the hydroxyl vale is more than 350 mgKOH/g, the polyurethane elastomer obtained is too hard and is unsuitable for use as a sealing gasket. The average number of functional groups of the polyol component (B) is 2 to 3 correspondingly to the average number of functional groups of the polyisocyanate component (A), because the polyurethane elastomer is preferably crosslinked to an appropriate extent.

In the present invention, a glycerin fatty acid ester (C) having hydroxyl group(s) is an ester derived by reacting a glycerin and a fatty acid such that a part of hydroxyl groups in the glycerin are left, that is, the amount of hydroxyl groups in the glycerin are excessive compared to that of carboxyl groups in the fatty acid. Specifically, as a glycerin fatty acid ester (C) having hydroxyl group(s), for example, glycerol monopalmitate, glycerol monostearate, glycerol mono-12-hydroxystearate, glycerol monooleate, glycerol monolaurate, glycerol distearate, glycerol di-12-hydroxystearate, glycerol dioleate, and a mixture of two or more of them can be enumerated.

Among them, a monoglyceride which is produced by esterifying one of three hydroxy-groups in a glycerin with a monofunctional fatty acid is preferred.

In the closure sealing gasket of the present invention, it is possible to use as necessary additives ordinarily used in polyurethane resins, such as catalyst, filler, coloring agent, antioxidant, lubricant, flame retardant, ultraviolet absorber, light stabilizer, electrical insulation improver, fungicide, silicone type surfactant, metal salt of organic acid, wax derived from organic acid, metal oxide, metal hydroxide, internal releasing agent, reinforcing agent, foaming agent and the like.

As the catalyst, there can be mentioned, for example, dibutyltin dilaurate, dioctyltin dilaurate (DOTDL), triethylamine, bismuth 2-ethylhexanoate, diazabicycloundecene, dimethyltin bis(iso-octylglycolate), monomethyltin tris(iso-octylglycolate), di(n-octyl)tin S,S'-bis(iso-octylmercaptoacetate) and di(n-octyl)tin maleate polymer.

The filler is used in order for the molded article obtained to have improved shape retainability, and there can be mentioned a glass fiber, talc, alcium carbonate, calcium oxide, powdery silica, etc.

As the coloring agent, pigments (e.g. titanium oxide) and dyes can be mentioned.

The antioxidant is preferably a hindered phenol type antioxidant. As specific examples, there can be mentioned 3-methyl-2,6-tert-butyl-phenol, tetrakis[methylene-3(3',5'-di-tert-butyl-4'-hydroxyphenyl)propionate]methane (Irganox 1010 produced by Ciba-Geigy Japan Limited), etc. Irganox 1010 is preferred viewed from the dissolution.

The additives can be added to the polyisocyanate component (A) or to the polyol component (B). However, since some additives react with isocyanate group, addition to the polyol component (B) and/or the glycerin fatty acid ester (C) having hydroxyl group(s) is preferred.

In the present invention, when the polyisocyanate component (A) is reacted with the polyol component (B) and the glycerin fatty acid ester (C) having hydroxyl group(s) to synthesize a polyurethane elastomer, the polyisocyanate component (A) is used in such a proportion that the isocyanate group become preferably 0.9 to 1.5 moles, more preferably about 1.00 to 1.10 moles per mole of the total amount of hydroxyl groups possessed by the polyol component (B) and the glycerin fatty acid ester (C) having hydroxyl group(s).

The loads of a glycerin fatty acid ester (C) having hydroxyl qroup(s) are preferably 0.1 to 20 parts by weight, and more preferably 0.5 to 10 parts by weight, based on 1,000 parts by weight of a polyol component (B).

In synthesizing the polyurethane elastomer of the present invention, a known urethanization technique can be used. It may be any of a prepolymer process and a one-shot process.

The polyurethane elastomer used in the present invention preferably has a JIS A hardness of 10 to 70, a tensile strength of 1 to 40 MPa and a compression set of 0.1 to 60%. It is an elastomer of low hardness and no yellowing.

When the JIS A hardness of the polyurethane elastomer is less than 10 and when such a polyurethane elastomer is used as a sealing gasket for a closure for container and the closure is applied to a container, the sealing gasket is contacted with the mouth portion of the container too strongly, often making difficult the removal of the closure. When the JIS A hardness of the polyurethane elastomer is larger than 70, the sealing gasket is contacted with the container mouth portion insufficiently (the sealing area is small), often making insufficient the sealing of the container.

When the polyurethane elastomer has a tensile strength of less than 1 MPa, the sealing gasket has an insufficient dynamic strength and is cut off when the closure fitted with the sealing gasket is opened or closed or when the container sealed with the closure is piled up, resulting in impaired sealability. When the polyurethane elastomer has a tensile strength of more than 40 MPa, the contact of the sealing gasket with the container mouth portion is insufficient, resulting in a small sealing area and insufficient sealability.

When the polyurethane elastomer has a compression set of less than 0.1%, the contact of the sealing gasket with the container mouth portion is insufficient, resulting in a small sealing area and insufficient sealability. When the polyurethane elastomer has a compression set of more than 60%, the sealing gasket causes creep owing to the vacuum of the container inside or the pressure applied when the container sealed with the closure is piled up, finally resulting in cutting-off of the sealing gasket along the container mouth.

The polyurethane elastomer used in the closure sealing gasket of the present invention, when subjected to a retort treatment of 120°C x 30 minutes using 10 ml, per g of the polyurethane elastomer, of water, gives an extract showing a potassium permanganate consumption of preferably 30 ppm or less.

In producing a closure (e.g. a metal closure for food container) according to the present invention, specifically and preferably the inner side of the groove of a closure is lined with a premixture of the polyisocyanate component (A), the polyol (B) and the glycerin fatty acid ester (C) having hydroxyl group(s); a reaction is allowed to take place between the component (A) and the component (B) at 150 to 240°C for 20 to 200 seconds; thereby, a polyurethane elastomer (a sealing gasket) is formed integrally with the closure. When the heating temperature is lower than 150°C, the formation of the polyurethane elastomer is insufficient. When the temperature is higher than 240°C, decomposition of urethane bond may occur. When the heating time is shorter than 20 seconds, the formation of the polyurethane elastomer is insufficient. When the time is longer than 200 seconds, polyurethane elastomer productivity is low and the conventional production line for polyvinyl chloride plastisol is unusable.

In producing a closure (e.g. a metal closure for food container) using a polyurethane elastomer synthesized beforehand, the polyurethane elastomer is melted and extruded into a closure made of a metal, a plastic or the like, or is injected thereinto, to make the polyurethane elastomer integral with the closure. Alternatively, a polyurethane elastomer powder may be placed in a closure and melted to make the polyurethane elastomer integral with the closure. The melting temperature is preferably 150 to 240°C.

In producing a closure of the present invention, (a) the amount of each of a polyisocyanate component (A) and a premixture of a polyol component (B) and a glycerin fatty acid ester (C) having hydroxyl group(s) is determined at a fixed ratio; (b) the quantified polyisocyanate component (A) is homogeneously mixed with the quantified premixture of the polyol component (B) and the glycerin fatty acid ester (C) having hydroxyl group(s); and (c) the homogeneously mixed liquid is intermittently discharged onto the inner surface of a cap so as to line the same.

It is necessary that according to the present invention components for a sealing gasket for a closure be mixed with each other just before the components are fed to the closure. Thus in the lining step, the timing of discharging the mixture in the step (c) mentioned above is preferably interlocked with the timing of feeding the liquid quantified in the step (a) mentioned above to the step (b).

The lining step mentioned above can be suitably carried out by means of a lining apparatus comprising (i) a supporting section for supporting a closure to be lined; (ii) a quantifying section for determining the amount of each of a polyisocyanate component (A) for a lining and a premixture of a polyol component (B) for the lining and a glycerin fatty acid ester (C) having hydroxyl group(s) for the lining, at a fixed ratio; (iii) a mixing section for homogeneously mixing the polyisocyanate component (A) and the premixture of the polyol component (B) and the glycerin fatty acid ester (C) having hydroxyl group(s), as quantified by means of the quantifying section; and (iv) a discharging section for intermittently discharging the liquid homogeneously mixed by means of the mixing section onto the inner surface of the closure as supported by means of the supporting section.

In the lining apparatus above, it is necessary that the individual raw materials for the lining can be precisely weighed in the quantifying section (ii) and be timely discharged to the mixing section (iii), wherein a metering pump such as a Mohno-pump or a gear pump can be suitably used. Furthermore, it is necessary in the mixing section (iii) that both of the liquids be homogeneously mixed with each other so as to prepare a suitable liquid, wherein a static mixing-equipment such as a static mixer, or a forced mixing-equipment such as a homomixer can be suitably used, said static mixing-equipment generating a turbulent flow within a flow channel for mixing the liquids, said forced mixing-equipment forcedly mixing the liquids by applying pressure and/or revolution thereto. Besides, it is significant in the discharging section (iv) that for example, the mixed liquid can be precisely applied in a given amount at a high speed, as well as is excellent in liquid-separating properties, wherein a nozzle gun (a needle valve), a Mohno-pump dispenser, a mixer cartridge or the like can be suitably used. The combination of a Mohno-pump, a static mixer and a nozzle gun (a needle valve) is in particular preferred in the sight of quantifying properties, homogeneous mixing properties, high-speed coating properties, mixed liquid-separating properties, coating-weight stability, film-thickness stability and the like.

The lining apparatus above is preferably provided with a discharge means and/or a modification means, said discharge means automatically discharging a specific quantity of the mixed liquid after a definite period of time in order to prevent the mixed liquid from curing in a flow channel when the apparatus shut down, said modification means automatically modifying the ratio of each of the liquids in the mixing section (iii) and the discharging section (iv) to such a ratio as the liquids are not cured. Furthermore, the lining apparatus is also preferably provided with a cleaning device capable of automatically cleaning itself. Thereby, even when the operation is temporarily stopped, the mixed liquid in the mixing section (iii) can be prevented from curing, and thus the operation can be restarted with no special treatment.

DESCRIPTION OF THE PREFERRED EMBODIMENTS

The present invention is described in more detail below by way of Examples. However, the present invention should not be construed to be restricted by the Examples.

In the following Synthesis Examples, etc., % refers to % by weight in all cases.

Isocyanate group content was measured by JIS K 7301, and hydroxyl value was measured according to a method specified by JIS K 1601.

The raw materials used in Synthesis examples, etc. are as follows.

| | |
|---|---|
| HDI : | hexamethylene diisocyanate |
| PTG-1000SN : | polytetramethylene ether glycol produced by Hodogaya Chemical Co., Ltd.; hydroxyl value = 112 mgKOH/g; average functional group number = 2 |
| P-1010 : | adipate type polyester glycol produced by KURARAY Co., LTD.; hydroxyl value = 112 mgKOH/g; average functional group number = 2 |
| F-510 : | adipate type polyestertriol produced by KURARAY Co., LTD.; hydroxyl value = 336 mgKOH/g; average functional group number = 3 |
| RIKEMAL S100 : | glycerin monostearate; hydroxyl value = 313 mgKOH/g; Riken Vitamin Co., Ltd.-make |
| RIKEMAL OL100 : | glycerin monooleate; hydroxyl value = 315 mgKOH/g; Riken Vitamin Co., Ltd.-make |
| 1,3-BG : | 1,3-butanediol |
| NPG : | neo-pentyl glycol |
| KS-1010A-1: | di(n-octyl)tin maleate polymer produced by KYODO CHEMICAL Co., LTD. |
| Irganox 1010 : | tetrakis[methylene-3(3',5'-di-tert-butyl-4'-hydroxyphenyl)-propionate]methane; Ciba-Geigy Ltd.-make |

Synthesis Example 1

Into a reactor were fed 70.7 g of HDI, 7.6 g of 1,3-BG, 6.6 g of neopentyl glycol and 15.2 g of hydrogenated bisphenol A. They were allowed to give rise to a reaction at 70˚C for 5 hours to obtain a viscous liquid having average 2 functional groups and an isocyanate group content of 17.6%. This liquid is named as polyisocyanate A.

Synthesis Example 2

78.9 g of HDI and 21.1 g of 1,3-BG were fed into a reactor and allowed to give rise to a reaction at 70˚C for 5 hours to obtain a viscous liquid having average 2 functional groups and an isocyanate group content of 19.7%. This liquid is named as polyisocyanate B.

Examples 1 to 6 and Comparative Examples 1 to 2

[Production of polyurethane elastomer sheets]

Individual raw materials beforehand subjected to vacuum degassing were fed into respective filling tanks in an amount ratio shown in Table 1. The raw materials in the tanks were mixed using a metering, discharging and compounding machine (a metering pump was present between each filling tank and the compounding machine) so as to avoid air trapping, whereby a reaction was allowed to take place between the polyisocyanate component, the polyol component and the glycerin fatty acid ester having hydroxyl group(s) at 100˚C for 1 hour to obtain various polyurethane elastomer sheets of 2 mm in thickness, 200 mm in width and 150 mm in length.

Each polyurethane sheet was measured for physical properties. The results are shown in Table 1.

The physical properties were measured according to JIS K 7312. The weather resistance was measured using a sunshine weatherometer and rated by visually examining the appearance after 600 hours.

[Measurement of potassium permanganate consumption]

15 g of each polyurethane sheet obtained above was immersed in 150 ml of distilled water. They were subjected to a retort treatment at 120˚C for 30 minutes. The aqueous solution (extract) after retort treatment was measured for potassium permanganate consumption (ppm) according to Notification No. 20 of the Welfare Ministry. The results are shown in Table 1.

[Whiskey Swelling Test]

Approximately 15 g of the polyurethane elastomer sheet mentioned above was immersed in 150 ml of HI Nikka Whisky, followed by treatment at a temperature of 80˚C for three hours. Thereafter, the swelling index of the resultant polyurethane elastomer sheet was determined.
This result was shown in Table 1 together.

$$[(\text{Weight after Swelling}) - (\text{Weight before Swelling})]/$$

$$(\text{Weight before Swelling}) = \text{Swelling Index (\%)}$$

[Whisky Odor Residual Test]

Approximately 15 g of the polyurethane elastomer sheet mentioned above was immersed in a whiskey and water consisting of 15 ml of a HI Nikka Whisky and 135 ml of mineral water Volvic, followed by still standing at room temperature for a period of thirty days.
The odor of the polyurethane elastomer sheet as immersed in the whiskey and water was compared with that of the one as not immersed, by five expert panelists.
This result was shown in Table 1 together.

Evaluation Criteria

○ : With no significant difference in odor; and
× : With a significant difference in odor

Table 1

| | Examples | | | | | | Comparative Examples | |
|---|---|---|---|---|---|---|---|---|
| | 1 | 2 | 3 | 4 | 5 | 6 | 1 | 2 |
| Polyisocyanate Component (g) | | | | | | | | |
| Polyisocyanate A | | | | 613 | 617 | 621 | | 612 |
| Polyisocyanate B | 548 | 551 | 555 | | | | 547 | |
| Polyol Component (g) | | | | | | | | |
| PTG-1000SN | 667 | 667 | 667 | 667 | 667 | 667 | 667 | 667 |
| P-1010 | 222 | 222 | 222 | 222 | 222 | 222 | 222 | 222 |
| F-510 | 111 | 111 | 111 | 111 | 111 | 111 | 111 | 111 |
| Glycerin Fatty Acid Ester having Hydroxyl Group (g) | | | | | | | | |
| RIKEMAL S100 | 1 | 3 | 6 | | | | | |
| RIKEMAL OL100E | | | | 1 | 3 | 6 | | |

(continued)

| | Examples | | | | | | Comparative Examples | |
|---|---|---|---|---|---|---|---|---|
| | 1 | 2 | 3 | 4 | 5 | 6 | 1 | 2 |
| R-value (Equivalent of Isocyanate Group/ Equivalent of Hydroxyl Group) | 1.05 | 1.05 | 1.05 | 1.05 | 1.05 | 1.05 | 1.05 | 1.05 |
| Additive Agent (g) Catalyst KS-1010A-1 | 0.3 | 0.3 | 0.3 | 0.3 | 0.3 | 0.3 | 0.3 | 0.3 |
| Antioxidant IRGANOX 1010 | 3 | 3 | 3 | 3 | 3 | 3 | 3 | 3 |
| Properties of Polyurethane Elastomer Tensile Strength (MPa) | 14.5 | 14.0 | 14.0 | 14.5 | 14.0 | 14.5 | 14.5 | 15.0 |
| Elongation (%) | 550 | 500 | 500 | 550 | 500 | 500 | 550 | 600 |
| Tear Strength (KN/m) | 27.0 | 27.2 | 27.3 | 27.4 | 26.4 | 24.5 | 26.0 | 27.3 |
| Antiweatherability (after 600 hours) | No Change | No Change | No Change | No Change | No Change | No Change | No Change | No Change |
| Consumption of Potassium Permanganate (ppm) | 1.0 | 0.9 | 1.1 | 1.0 | 1.0 | 0.8 | 1.0 | 1.0 |
| Whiskey Swelling-Ratio (%) | 10.8 | 9.5 | 8.1 | 11.1 | 9.7 | 8.3 | 26.8 | 28.4 |
| Residual Properties of Whiskey Odor | O | O | O | O | O | O | × | × |

### Example 7

[Production of closure]

The inner side of a groove which had been preformed at the periphery inside a coated metallic closure (a white cap) of a food wide-mouthed bottle was lined with 667 g of PTG-1000SN, 222 g of P-1010, 111 g of F-510, 2 g of REKEMAL S-100, 0.3 g of KS-1010A-1, 3 g of Irganox 1010, 300 g of calcium oxide, 3 g of titanium oxide, and 548 g of polyisocyanate-A by means of a lining apparatus so as to attain a thickness of 1 mm. The resultant closure was immediately positioned in an oven at a temperature of 200 ˚C for 40 seconds for a reaction so as to obtain a metallic closure for the wide-mouthed bottle, wherein a sealing gasket was monolithically formed.

[Evaluation of sealing gasket]

Hot water of 90˚C was filled in a wide-mouthed bottle by 80% of the internal volume. The bottle was sealed with the above-obtained metal closure and then subjected to a retort treatment at 120˚C for 30 minutes. Thereafter, the bottle was subjected to a stability test of one month at 37˚C. The sealability of the bottle was evaluated by the vacuum and vacuum change of the bottle obtained by measuring the internal pressure of the bottle using a vacuum gauge. The vacuum after the stability test was 30 cmHg and was the same as that before the test. The cap was removed after the stability test of one month at 37˚C and the condition of the sealing gasket after the test was examined visually. As a result, there was no abnormality in the condition of the sealing gasket. In an unsuitable sealing gasket, there arises a cut-through phenomenon; that is, cutting-off of sealing gasket takes place along the bottle mouth and the inner surface of the metal closure is exposed.

A polyurethane elastomer sheet was produced in the same manner as in Example 1 and used for measurement of sealing gasket physical properties. The reaction conditions in sheet production were 200˚C and 40 seconds. The sheet showed a tensile strength of 10 MPa, a hardness of 60, an elongation of 400%, a compression set of 6% and a potassium permanganate consumption of 1 ppm. The elastomer showed no discoloration even after 2-month storage.

**Claims**

1. A sealing gasket for closure, made of a polyurethane elastomer obtained by reacting the following (A), (B) and (C) :

   (A) a polyisocyanate component having an isocyanate group content of 5 to 38% by weight and average 2 to 3 functional groups, obtained by modifying an aliphatic isocyanate and/or an alicyclic isocyanate,
   (B) a polyol component having a hydroxyl value of 20 to 350 mgKOH/g and average 2 to 3 functional groups, and
   (C) a glycerin fatty acid ester having hydroxyl group(s) derived by reacting a glycerin and a fatty acid such that a part of the hydroxyl groups in the glycerin are left.

2. A sealing gasket for closure according to Claim 1, wherein the (A) is a polyisocyanate component having an isocyanate group content of 5 to 38% by weight and average 2 to 3 functional groups, obtained by modifying an aliphatic isocyanate and/or an alicyclic isocyanate according to a uretdione-forming reaction, an isocyanurate-forming reaction and/or a urethanization reaction.

3. A sealing gasket for closure according to Claim 1, wherein the (A) is a polyisocyanate component having an isocyanate group content of 5 to 38% by weight and average 2 to 3 functional groups, obtained by modifying an aliphatic isocyanate and/or an alicyclic isocyanate according to an isocyanurate-forming reaction and/or a urethanization reaction.

4. A sealing gasket for closure according to Claim 1, wherein the (B) is a polyol component having a hydroxyl value of 20 to 350 mgKOH/g and average 2 to 3 functional groups, consisting of one or more polyol(s) having a number average molecular weight of more than 500.

5. A sealing gasket for closure according to Claim 1, wherein the (B) is a polyol component having a hydroxyl value of 20 to 350 mgKOH/g and average 2 to 3 functional groups, consisting of a mixture of a polyol having a number average molecular weight of more than 500 and a polyol having a number average molecular weight of less than 500.

6. A sealing gasket for closure according to Claim 1, wherein the polyurethane elastomer, when subjected to a retort treatment of 120 deg. C x 30 minutes using 10 ml, per g of the polyurethane elastomer, of water, gives an extract showing a potassium permanganate consumption of 30 ppm or less.

7. A sealing gasket for closure according to Claim 1, wherein the polyurethane elastomer has a JIS A hardness of 10 to 70, a tensile strength of 1 to 40 MPa and a compression set of 0.1 to 60%.

8. A process for producing a closure, which comprises reacting the following (A), (B) and (C) at the inner side of a closure to synthesize a polyurethane elastomer in such a state that the polyurethane elastomer is integrated with the closure:

   (A) a polyisocyanate component having an isocyanate group content of 5 to 38% by weight and average 2 to 3 functional groups, obtained by modifying an aliphatic isocyanate and/or an alicyclic isocyanate,
   (B) a polyol component having a hydroxyl value of 20 to 350 mgKOH/g and average 2 to 3 functional groups, and
   (C) a glycerin fatty acid ester having hydroxyl group(s) derived by reacting a glycerin and a fatty acid such that a part of the hydroxyl groups in the glycerin are left.

9. A process for producing a closure according to Claim 8, wherein the (A) is a polyisocyanate component having an isocyanate group content of 5 to 38% by weight and average 2 to 3 functional groups, obtained by modifying an aliphatic isocyanate and/or an alicyclic isocyanate according to a uretdione-forming reaction, an isocyanurate-forming reaction and/or a urethanization reaction.

10. A process for producing a closure according to Claim 8, wherein the (A) is a polyisocyanate component having an isocyanate group content of 5 to 38% by weight and average 2 to 3 functional groups, obtained by modifying an aliphatic isocyanate and/or an alicyclic isocyanate according to an isocyanurate-forming reaction and/or a urethanization reaction.

11. A process for producing a closure according to Claim 8, wherein the (B) is a polyol component having a hydroxyl value of 20 to 350 mgKOH/g and average 2 to 3 functional groups, consisting of one or more polyol(s) having a number average molecular weight of more than 500.

12. A process for producing a closure according to Claim 8, wherein the (B) is a polyol component having a hydroxyl value of 20 to 350 mgKOH/g and average 2 to 3 functional groups, consisting of a mixture of a polyol having a number average molecular weight of more than 500 and a polyol having a number average molecular weight of less than 500.

13. A process for producing a closure according to Claim 8, wherein the polyurethane elastomer, when subjected to a retort treatment of 120˚C x 30 minutes using 10 ml, per g of the polyurethane elastomer, of water, gives an extract showing a potassium permanganate consumption of 30 ppm or less.

14. A process for producing a closure according to Claim 8, wherein the polyurethane elastomer has a JIS A hardness of 10 to 70, a tensile strength of 1 to 40 MPa and a compression set of 0.1 to 60%.

15. A process for producing a closure, which comprises lining the inner side of a closure with the following (A), (B) and (C) and then reacting the (A), the (B) and the (C) at 150 to 240˚C for 20 to 200 seconds to synthesize a polyurethane elastomer in such a state that the polyurethane elastomer is integrated with the closure:

    (A) a polyisocyanate component having an isocyanate group content of 5 to 38% by weight and average 2 to 3 functional groups, obtained by modifying an aliphatic isocyanate and/or an alicyclic isocyanate,
    (B) a polyol component having a hydroxyl value of 20 to 350 mgKOH/g and average 2 to 3 functional groups, and
    (C) a glycerin fatty acid ester having hydroxyl group(s) derived by reacting a glycerin and a fatty acid such that a part of the hydroxyl groups in the glycerin are left.

16. A process for producing a closure according to Claim 15, wherein the (A) is a polyisocyanate component having an isocyanate group content of 5 to 38% by weight and average 2 to 3 functional groups, obtained by modifying an aliphatic isocyanate and/or an alicyclic isocyanate according to a uretdione-forming reaction, an isocyanurate-forming reaction and/or a urethanization reaction.

17. A process for producing a closure according to Claim 15, wherein the (A) is a polyisocyanate component having an isocyanate group content of 5 to 38% by weight and average 2 to 3 functional groups, obtained by modifying an aliphatic isocyanate and/or an alicyclic isocyanate according to an isocyanurate-forming reaction and/or a urethanization reaction.

18. A process for producing a closure according to Claim 15, wherein the (B) is a polyol component having a hydroxyl value of 20 to 350 mgKOH/g and average 2 to 3 functional groups, consisting of one or more polyol(s) having a number average molecular weight of more than 500.

19. A process for producing a closure according to Claim 15, wherein the (B) is a polyol component having a hydroxyl value of 20 to 350 mgKOH/g and average 2 to 3 functional groups, consisting of a mixture of a polyol having a number average molecular weight of more than 500 and a polyol having a number average molecular weight of less than 500.

20. A process for producing a closure according to Claim 15, wherein the polyurethane elastomer, when subjected to a retort treatment of 120˚C x 30 minutes using 10 ml, per g of the polyurethane elastomer, of water, gives an extract showing a potassium permanganate consumption of 30 ppm or less.

21. A process for producing a closure according to Claim 15, wherein the polyurethane elastomer has a JIS A hardness of 10 to 70, a tensile strength of 1 to 40 MPa and a compression set of 0.1 to 60%.

**Patentansprüche**

1. Verschlussdichtung als Verschluss aus einem Polyurethanelastomer, das durch die Umsetzung von (A), (B) und (C) erhalten wird:

   (A) einer Polyisocyanatkomponente mit einem Isocyanatgruppengehalt von 5 bis 38 Gew.-% und durchschnittlich 2 bis 3 funktionellen Gruppen, die durch das Modifizieren eines aliphatischen Isocyanats und/oder eines alizyklischen Isocyanats erhalten wird,
   (B) einer Polyolkomponente mit einem Hydroxylwert von 20 bis 350 mgKOH/g und durchschnittlich 2 bis 3 funktionellen Gruppen und
   (C) einem Glycerinfettsäureester mit (einer) Hydroxylgruppe(n), der durch das Umsetzen eines Glycerins und einer Fettsäure so erhalten wird, dass ein Teil der Hydroxylgruppen in dem Glycerin bestehen bleiben.

2. Verschlussdichtung als Verschluss nach Anspruch 1, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Uretdion, einer Reaktion zur Ausbildung von Isocyanurat und/oder einer Urethanisierungsreaktion erhalten wird.

3. Verschlussdichtung als Verschluss nach Anspruch 1, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Isocyanurat und/oder einer Urethanisierungsreaktion erhalten wird.

4. Verschlussdichtung als Verschluss nach Anspruch 1, worin (B) eine Polyolkomponente mit einem Hydroxylwert von 20 bis 350 mgKOH/g und durchschnittlich 2 bis 3 funktionellen Gruppen ist, die aus einem oder mehreren Polyolen mit einem zahlenmittleren Molekulargewicht von mehr als 500 besteht.

5. Verschlussdichtung als Verschluss nach Anspruch 1, worin (B) eine Polyolkomponente mit einem Hydroxylwert von 20 bis 350 mgKOH/g und durchschnittlich 2 bis 3 funktionellen Gruppen ist, die aus einem Gemisch eines Polyols mit einem zahlenmittleren Molekulargewicht von mehr als 500 und einem Polyol mit einem zahlenmittleren Molekulargewicht von weniger als 500 besteht.

6. Verschlussdichtung als Verschluss nach Anspruch 1, worin das Polyurethanelastomer bei Aussetzen gegenüber einer 30-minütigen Retortenbehandlung bei 120 °C unter Verwendung von 10 ml Wasser pro g des Polyurethanelastomers einen Extrakt liefert, der einen Kaliumpermanganatverbrauch von 30 ppm oder weniger aufweist.

7. Verschlussdichtung als Verschluss nach Anspruch 1, worin das Polyurethanelastomer eine JIS-A-Härte von 10 bis 70, eine Zugfestigkeit von 1 bis 40 MPa und eine Druckverformung von 0,1 bis 60 % aufweist.

8. Verfahren zur Herstellung eines Verschlusses, das das Umsetzen von (A), (B) und (C) an der Innenseite eines Verschlusses zur Synthetisierung eines Polyurethanelastomers umfasst, sodass das Polyurethanelastomer in den Verschluss integriert ist:

   (A) einer Polyisocyanatkomponente mit einem Isocyanatgruppengehalt von 5 bis 38 Gew.-% und durchschnittlich 2 bis 3 funktionellen Gruppen, die durch das Modifizieren eines aliphatischen Isocyanats und/oder eines alizyklischen Isocyanats erhalten wird,
   (B) einer Polyolkomponente mit einem Hydroxylwert von 20 bis 350 mgKOH/g und durchschnittlich 2 bis 3 funktionellen Gruppen und
   (C) einem Glycerinfettsäureester mit (einer) Hydroxylgruppe(n), der durch das Umsetzen eines Glycerins und einer Fettsäure so erhalten wird, dass ein Teil der Hydroxylgruppen in dem Glycerin bestehen bleiben.

9. Verfahren zur Herstellung eines Verschlusses nach Anspruch 8, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Uretdion, einer Reaktion zur Ausbildung von Isocyanurat und/oder einer Urethanisierungsreaktion erhalten wird.

**10.** Verfahren zur Herstellung eines Verschlusses nach Anspruch 8, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Isocyanurat und/oder einer Urethanisierungsreaktion erhalten wird.

**11.** Verfahren zur Herstellung eines Verschlusses nach Anspruch 8, worin (B) eine Polyolkomponente mit einem Hydroxylwert von 20 bis 350 mgKOH/g und durchschnittlich 2 bis 3 funktionellen Gruppen ist, die aus einem oder mehreren Polyolen mit einem zahlenmittleren Molekulargewicht von mehr als 500 besteht.

**12.** Verfahren zur Herstellung eines Verschlusses nach Anspruch 8, worin (B) eine Polyolkomponente mit einem Hydroxyliert von 20 bis 350 mgKOH/g und durchschnittlich 2 bis 3 funktionellen Gruppen ist, die aus einem Gemisch eines Polyols mit einem zahlenmittleren Molekulargewicht von mehr als 500 und einem Polyol mit einem zahlenmittleren Molekulargewicht von weniger als 500 besteht.

**13.** Verfahren zur Herstellung eines Verschlusses nach Anspruch 8, worin das Polyurethanelastomer bei Aussetzen gegenüber einer 30-minütigen Retortenbehandlung bei 120 ˚C unter Verwendung von 10 ml Wasser pro g des Polyurethanelastomers einen Extrakt liefert, der einen Kaliumpermanganatverbrauch von 30 ppm oder weniger aufweist.

**14.** Verfahren zur Herstellung eines Verschlusses nach Anspruch 8, worin das Polyurethanelastomer eine JIS-A-Härte von 10 bis 70, eine Zugfestigkeit von 1 bis 40 MPa und eine Druckverformung von 0,1 bis 60 % aufweist.

**15.** Verfahren zur Herstellung eines Verschlusses, das das Verkleiden der Innenseite eines Verschlusses mit (A), (B) und (C) und das anschließende Umsetzen von (A), (B) und (C) 20 bis 200 s lang bei 150 bis 240 ˚C zur Synthetisierung eines Polyurethanelastomers umfasst, sodass das Polyurethanelastomer in den Verschluss integriert wird:

(A) einer Polyisocyanatkomponente mit einem Isocyanatgruppengehalt von 5 bis 38 Gew.-% und durchschnittlich 2 bis 3 funktionellen Gruppen, die durch das Modifizieren eines aliphatischen Isocyanats und/oder eines alizyklischen Isocyanats erhalten wird,
(B) einer Polyolkomponente mit einem Hydroxylwert von 20 bis 350 mgKOH/g und durchschnittlich 2 bis 3 funktionellen Gruppen und
(C) einem Glycerinfettsäureester mit (einer) Hydroxylgruppe(n), der durch das Umsetzen eines Glycerins und einer Fettsäure so erhalten wird, dass ein Teil der Hydroxylgruppen in dem Glycerin bestehen bleiben.

**16.** Verfahren zur Herstellung eines Verschlusses nach Anspruch 15, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Uretdion, einer Reaktion zur Ausbildung von Isocyanurat und/oder einer Urethanisierungsreaktion erhalten wird.

**17.** Verfahren zur Herstellung eines Verschlusses nach Anspruch 15, worin (A) eine Polyisocyanatkomponente mit einem Isocyanatgruppengehalt von 5 bis 38 Gew.-% und durchschnittlich 2 bis 3 funktionellen Gruppen ist, die durch das Modifizieren eines aliphatischen Isocyanats und/oder eines alizyklischen Isocyanats gemäß einer Reaktion zur Ausbildung von Isocyanurat und/oder einer Urethanisierungsreaktion erhalten wird.

**18.** Verfahren zur Herstellung eines Verschlusses nach Anspruch 15, worin (B) eine Polyolkomponente mit einem Hydroxylwert von 20 bis 350 mgKOH/g und durchschnittlich 2 bis 3 funktionellen Gruppen ist, die aus einem oder mehreren Polyolen mit einem zahlenmittleren Molekulargewicht von mehr als 500 besteht.

**19.** Verfahren zur Herstellung eines Verschlusses nach Anspruch 15, worin (B) eine Polyolkomponente mit einem Hydroxylwert von 20 bis 350 mgKOH/g und durchschnittlich 2 bis 3 funktionellen Gruppen ist, die aus einem Gemisch eines Polyols mit einem zahlenmittleren Molekulargewicht von mehr als 500 und einem Polyol mit einem zahlenmittleren Molekulargewicht von weniger als 500 besteht.

**20.** Verfahren zur Herstellung eines Verschlusses nach Anspruch 15, worin das Polyurethanelastomer bei Aussetzen gegenüber einer 30-minütigen Retortenbehandlung bei 120 ˚C unter Verwendung von 10 ml Wasser pro g des Polyurethanelastomers einen Extrakt liefert, der einen Kaliumpermanganatverbrauch von 30 ppm oder weniger aufweist.

**21.** Verfahren zur Herstellung eines Verschlusses nach Anspruch 15, worin das Polyurethanelastomer eine JIS-A-Härte von 10 bis 70, eine Zugfestigkeit von 1 bis 40 MPa und eine Druckverformung von 0,1 bis 60 % aufweist.

**Revendications**

**1.** Garniture d'étanchéité pour bouchon de fermeture, réalisée en un élastomère de polyuréthane obtenu par la réaction de (A), (B) et (C) suivants:

(A) un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique,
(B) un composant de polyol ayant une valeur hydroxyle de 20 à 350 mgKOH/g et en moyenne 2 à 3 groupes fonctionnels, et
(C) un ester d'acide gras de glycérine ayant un ou des groupes hydroxyles dérivés en faisant réagir une glycérine et un acide gras de telle sorte qu'une partie des groupes hydroxyles dans la glycérine subsiste.

**2.** Garniture d'étanchéité pour bouchon de fermeture selon la revendication 1, où (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'uretdione, une réaction de formation d'isocyanurate et/ou une réaction d'uréthanisation.

**3.** Garniture d'étanchéité pour bouchon de fermeture selon la revendication 1, dans laquelle (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'isocyanurate et/ou une réaction d'uréthanisation.

**4.** Garniture d'étanchéité pour bouchon de fermeture selon la revendication 1, où (B) est un composant de polyol ayant une valeur hydroxyle de 20 à 350 mgKOH/g et en moyenne 2 à 3 groupes fonctionnels, consistant en un ou plusieurs polyols ayant une masse moléculaire moyenne en nombre supérieure à 500.

**5.** Garniture d'étanchéité pour bouchon de fermeture selon la revendication 1, dans laquelle (B) est un composant polyol ayant une valeur hydroxyle de 20 à 350 mgKOH/g et en moyenne 2 à 3 groupes fonctionnels, consistant en un mélange d'un polyol ayant une masse moléculaire moyenne en nombre supérieure à 500 et un polyol ayant une masse moléculaire moyenne en nombre inférieure à 500.

**6.** Garniture d'étanchéité pour bouchon de fermeture selon la revendication 1, dans laquelle l'élastomère de polyuréthane, lorsqu'il est soumis à un traitement de cornue de 120 degrés C x 30 minutes en utilisant 10 ml par g d'élastomère de polyuréthane, d'eau, fournit un extrait montrant une consommation de permanganate de potassium de 30 ppm ou moins.

**7.** Garniture d'étanchéité pour un bouchon de fermeture selon la revendication 1, dans laquelle l'élastomère de polyuréthane a une dureté JIS A de 10 à 70, une résistance à la traction de 1 à 40 MPa et une déformation rémanente après compression de 0,1 à 60%.

**8.** Procédé de fabrication d'un bouchon de fermeture, qui comprend la réaction de (A), (B) et (C) suivants au côté intérieur d'un bouchon de fermeture pour synthétiser un élastomère de polyuréthane dans un état tel que l'élastomère de polyuréthane est intégré dans la fermeture:

(A) un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique,
(B) un composant de polyol ayant une valeur d'hydroxyle de 20 à 35 mgKOH/g et en moyenne 2 à 3 groupes fonctionnels, et
(C) un ester d'acide gras de glycérine ayant un ou des groupes hydroxyles dérivés en faisant réagir une glycérine et un acide gras de telle sorte qu'une partie des groupes hydroxyles dans la glycérine subsiste.

**9.** Procédé de fabrication d'un bouchon de fermeture selon la revendication 8, où (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'uretdione, une réaction de formation d'isocyanurate et/ou une réaction d'uréthanisation.

10. Procédé de fabrication d'un bouchon de fermeture selon la revendication 8, où (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'isocyanurate et/ou une réaction d'uréthanisation.

11. Procédé de fabrication d'un bouchon de fermeture selon la revendication 8, où (B) est un composant de polyol ayant une valeur hydroxyle de 20 à 350 mgKOH/g et en moyenne 2 à 3 groupes fonctionnels, consistant en un ou plusieurs polyols ayant une masse moléculaire moyenne en nombre supérieure à 500.

12. Procédé de fabrication d'un bouchon de fermeture selon la revendication 8, dans lequel (B) est un composant de polyol ayant une valeur d'hydroxyle de 20 à 350 mgKOH/g et en moyenne 2 à 3 groupes fonctionnels, consistant en un mélange d'un polyol ayant une masse moléculaire moyenne en nombre supérieure à 500 et d'un polyol ayant une masse moléculaire moyenne en nombre inférieure à 500.

13. Procédé de fabrication d'un bouchon de fermeture selon la revendication 8, dans lequel l'élastomère de polyuréthane, lorsqu'il est soumis à un traitement à cornue de 120°C x 30 minutes en utilisant 10 ml, par g d'élastomère de polyuréthane, d'eau, fournit un extrait ayant une consommation de permanganate de potassium de 30 ppm ou moins.

14. Procédé de fabrication d'un bouchon de fermeture selon la revendication 8, dans lequel l'élastomère de polyuréthane a une dureté JIS A de 10 à 70, une résistance à la traction de 1 à 40 MPa et une déformation après compression de 0,1 à 60%.

15. Procédé de fabrication d'un bouchon de fermeture, qui comprend le revêtement du côté intérieur d'un bouchon de fermeture avec (A), (B) et (C) suivants et ensuite la réaction de (A), (B) et (C) à 150 jusqu'à 240°C pendant 20 à 200 secondes pour synthétiser un élastomère de polyuréthane dans un état tel que l'élastomère de polyuréthane est intégré dans le bouchon de fermeture:

(A) un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique,
(B) un composant de polyol ayant une valeur d'hydroxyle de 20 à 350 mgKOH/g et en moyenne 2 à 3 groupes fonctionnels, et
(C) un ester d'acide gras de glycérine ayant un ou des groupes hydroxyles dérivés en faisant réagir une glycérine et un acide gras de telle sorte qu'une partie des groupes hydroxyles dans la glycérine subsiste.

16. Procédé de fabrication d'un bouchon de fermeture selon la revendication 15, dans lequel (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'uretdione, une réaction de formation d'isocyanurate et/ou une réaction d'uréthanisation.

17. Procédé de fabrication d'un bouchon de fermeture selon la revendication 15, dans lequel (A) est un composant de polyisocyanate ayant une teneur en groupes isocyanates de 5 à 38% en poids et en moyenne 2 à 3 groupes fonctionnels, obtenus en modifiant un isocyanate aliphatique et/ou un isocyanate alicyclique selon une réaction de formation d'isocyanurate et/ou une réaction d'uréthanisation.

18. Procédé de fabrication d'un bouchon de fermeture selon la revendication 15, dans lequel (B) est un composant de polyol ayant une valeur d'hydroxyle de 20 à 350 mgKOH/g et en moyenne 2 à 3 groupes fonctionnels, consistant en un ou plusieurs polyols ayant une masse moléculaire moyenne en nombre supérieure à 500.

19. Procédé de fabrication d'un bouchon de fermeture selon la revendication 15, dans lequel (B) est un composant de polyol ayant une valeur d'hydroxyle de 20 à 350 mgKOH/g et en moyenne 2 à 3 groupes fonctionnels, consistant en un mélange d'un polyol ayant une masse moléculaire moyenne en nombre supérieure à 500 et d'un polyol ayant une masse moléculaire moyenne en nombre inférieure à 500.

20. Procédé de fabrication d'un bouchon de fermeture selon la revendication 15, dans lequel l'élastomère de polyuréthane, lorsqu'il est soumis à un traitement à cornue de 120°C x 30 minutes en utilisant 10 ml, par g d'élastomère de polyuréthane, d'eau, fournit un extrait ayant une consommation de permanganate de potassium de 30 ppm ou moins.

21. Procédé de fabrication d'un bouchon de fermeture selon la revendication 15, dans lequel l'élastomère de polyuréthane a une dureté JIS A de 10 à 70, une résistance à la traction de 1 à 40 MPa et une déformation après compression de 0,1 à 60%.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58067780 A
- JP 63008685 A
- JP 61009481 A
- EP 1199324 A
- JP 63035655 B